# EUROPÄISCHE PATENTSCHRIFT

(11) **EP 0 932 524 B1**
(45) Veröffentlichungstag und Bekanntmachung des Hinweises auf die Patenterteilung: **05.09.2001**
(21) Anmeldenummer: 97945753.8
(22) Anmeldetag: 16.10.1997
(51) Int. Cl.: B60R 11/02, H04M 1/02, H04B 1/08

(54) **RUNDFUNKEMPFÄNGER**
RADIO RECEIVER
RECEPTEUR RADIO

(30) Priorität: 21.10.1996 DE 19643282
(43) Veröffentlichungstag der Anmeldung: 04.08.1999
(73) Patentinhaber: ROBERT BOSCH GMBH, 70442 Stuttgart (DE)
(72) Erfinder: BENTHIN, Marcus, D-31139 Hildesheim (DE); THEIS, Herbert, D-31199 Diekholzen (DE)
(86) Internationale Anmeldenummer: DE9702377
(87) Internationale Veröffentlichungsnummer: WO9817502

(56) Entgegenhaltungen:
- EP-A- 0 451 369
- DE-C- 3 927 759
- DE-U- 9 109 141
- US-A- 5 493 703

## Beschreibung

### Stand der Technik

Die Erfindung geht von einem Rundfunkempfänger nach der Gattung des Hauptanspruchs aus.

Es sind bereits als Autoradio ausgebildete Rundfunkempfänger bekannt, bei denen das Bedienteil als abnehmbares Teil der Frontkappe ausgeführt ist. Beim Verlassen des Fahrzeugs kann das Bedienteil leicht vom Autoradio entfernt und mitgenommen werden. Ohne das Bedienteil ist der Rundfunkempfänger nicht funktionsfähig. Auf diese Weise wird ein Schutz vor Diebstahl des Rundfunkempfängers ermöglicht.

Aus der DE-U-91 09 141 ist ein Autoradio mit einem abenehmbaren Bedienteil bekannt, bei dem das Bedienteil derart ausgestattet ist, daß es am Autoradio befestigt, zur Bedienung und Anzeige des Autoradios und im abgenommenen Zustand als Telefonhandapparat dient. Das Bedienteil weist eine Tastatur auf, mit der das Funkgerät bedienbar ist.

Ein Autoradio mit abnehmbaren Bedienteil ist beispielsweise aus "Fascination made by GRUNDIG, GRUNDIG Revue '92" unter der Bezeichnung 2680 VD bekannt.

### Vorteile der Erfindung

Der erfindungsgemäße Rundfunkempfänger mit den Merkmalen des Hauptanspruchs hat demgegenüber den Vorteil, daß durch die Ausbildung des Bedienteils als Funkgerät bzw. Funktelefon die Funktionalität des Bedienteils wesentlich erhöht wird. Die Bedienung des Rundfunkempfängers und des Funkgerätes durch ein gemeinsames Bedienteil reduziert außerdem den Materialaufwand, den Platzbedarf und die Herstellungskosten und ermöglicht eine übersichtliche und kompfortable Verbindung von Rundfunkempfänger- und Funkgerätebedienung.

Durch die Verbindung des Funkgerätes mit dem Rundfunkempfänger ist außerdem der Vorteil gegeben, daß Daten und/oder Antennensignale zwischen dem Bedienteil und dem Rundfunkempfänger austauschbar sind. Auf diese Weise wird einerseits das Funkgerät als Bedienteil für den Rundfunkempfänger und andererseits der Rundfunkempfänger für den Funkbetrieb genutzt. Somit wird auch die Funktionalität des Rundfunkempfängers erhöht.

Durch die in den Unteransprüchen aufgeführten Maßnahmen sind vorteilhafte Weiterbildungen und Verbesserungen des im Hauptanspruch angegebenen Rundfunkempfängers möglich.

Vorteilhaft ist die Ausstattung des Bedienteils mit einem Akkumulator, der über die Schnittstelle aufladbar ist. Auf diese Weise bleibt das Bedienteil auch nach Abnahme vom Rundfunkempfänger funktionsfähig, da es dann vom Akkumulator mit Strom versorgt werden kann.

Vorteilhaft ist auch die Ausstattung des Bedienteils mit einem Kartenschacht zur Aufnahme einer Zugangsberechtigungskarte. Dadurch läßt sich mit einer einzigen Zugangsberechtiguungskarte und einem einzigen Kartenschacht die Inbetriebnahme sowohl des Rundfunkempfängers als auch des Funkgerätes realisieren. Somit werden Platz, Aufwand, Material und Kosten bei der Herstellung eingespart und gleichzeitig die Übersichtlichkeit und der Komfort für die Bedienung des Funkgerätes bzw. des Rundfunkempfängers erhöht.

Besonders vorteilhaft ist die zumindest teilweise Ausbildung der Schnittstelle als optische, vorzugsweise im Infrarotbereich wirkende Schnittstelle. Auf diese Weise wird verhindert, daß vor allem beim Datenaustausch zwischen Bedienteil und Rundfunkempfänger mit höheren Datenraten EMV-Probleme beim Überkoppeln von Signalen zwischen einzelnen Verbindungsleitungen der Schnittstelle auftreten.

Ein weiterer Vorteil besteht darin, daß das Bedienteil mit einer Hörkapsel und/oder einem Mikrophon ausgestattet ist und daß bei abgenommenen Bedienteil Funksignale zur Kommunikation mit der Funkstation vom Bedienteil über eine vorzugsweise ausziehbare Antenne aussendbar und/oder empfangbar sind. Auf diese Weise kann das Bedienteil auch unabhängig vom Rundfunkempfänger als Funkgerät zur Kommunikation mit Funkstationen verwendet werden. Dadurch wird eine mobile, ortsunabhängige Kommunikation ermöglicht. Bei der Ausbildung des Rundfunkempfängers als Autoradio ergibt sich zusätzlich der Vorteil, daß die Mitnahme des Bedienteils als Diebstahlschutz vom Benutzer nicht als störend empfunden wird, da das vom Autoradio getrennte Bedienteil gleichzeitig einen Nutzwert durch Ausstattung mit der Funktionalität eines Mobiltelefons aufweist. Der Benutzer erhält somit die Möglichkeit, außerhalb seines Fahrzeugs mobil zu telefonieren bei gleichzeitiger Realisierung des Diebstahlschutzes für sein Autoradio.

Vorteilhaft ist die Abschaltung der Antenne und/oder der Hörkapsel und/oder des Mikrophons bei auf dem Rundfunkempfänger aufgesteckten Bedienteil und die Verbindung des Rundfunkempfängers mit einer Tonwiedergabeeinheit und/oder einer Freisprecheinrichtung. Auf diese Weise wird die Funktionalität des Rundfunkempfängers erhöht, da seine Tonwiedergabeeinheit und/oder Freisprecheinrichtung auch vom Funkgerät genutzt werden kann. Außerdem wird dadurch die Bedienung des Funkgerätes, vor allem bei Spracheingabe über die Freisprecheinrichtung vereinfacht und über die Tonwiedergabeeinheit eine Mithörgelegenheit gegeben.

Vorteilhaft ist die Verwendung einer Anzeige am Bedienteil zur Darstellung von Informationen über an der Tastatur gewählte Befehle und/oder von in der Schnittstelle empfangenen Daten. Auf diese Weise ist für das Funkgerät und den Rundfunkempfänger nur eine einzige Anzeige erforderlich, so daß Platz, Aufwand, Material und Kosten bei der Herstellung eingespart werden. Außerdem wird durch die Verwendung einer einzigen Anzeige ein hohes Maß an Übersichtlichkeit und Bedienkomfort für den Benutzer ermöglicht.

### Zeichnung

Ein Ausführungsbeispiel der Erfindung ist in der Zeichnung dargestellt und in der nachfolgenden Beschreibung näher erläutert. Es zeigen Figur 1 eine Vorderansicht des Bedienteils, Figur 2 eine Rückansicht des Bedienteils, Figur 3 eine Vorderansicht des Rundfunkempfängers bei abgenommenen Bedienteil und Figur 4 ein Blockschaltbild des Rundfunkempfängers mit angeschlossenem Bedienteil.

### Beschreibung des Ausführungsbeispiels

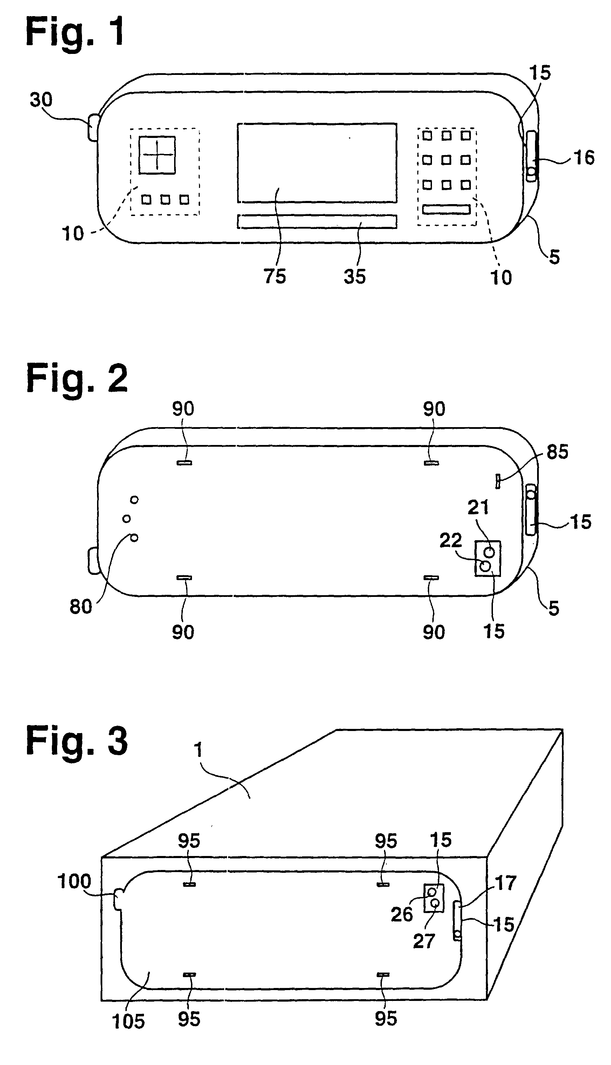

In Figur 1 ist die Vorderansicht eines Bedienteils 5 eines als Autoradio ausgebildeten Rundfunkempfängers 1 dargestellt. Das Bedienteil 5 ist zur Realisierung eines Diebstahlschutzes vom Rundfunkempfänger 1 abnehmbar. Es weist eine Tastatur 10 zur Bedienung des Rundfunkempfängers 1 auf. Weiterhin ist eine Anzeige 75 und ein Kartenschacht 35 zur Aufnahme einer Zugangsberechtigungskarte vorgesehen. An einer Seitenwand des Bedienteils 5 ist eine als Buchse 16 ausgebildete Schnittstelle 15 mit elektrischen Kontakten vorgesehen, die die elektrische Verbindung zwischen Bedienteil 5 und Rundfunkempfänger 1 herstellt, wenn das Bedienteil 5 auf den Rundfunkempfänger 1 aufgesteckt, d. h. mit dem Rundfunkempfänger 1 verbunden ist. Das Bedienteil 5 weist an einer weiteren Seitenwand eine ausziehbare Antenne 30 auf. In das Bedienteil 5 ist ein als Funktelefon ausgebildetes Funkgerät 50 integriert.

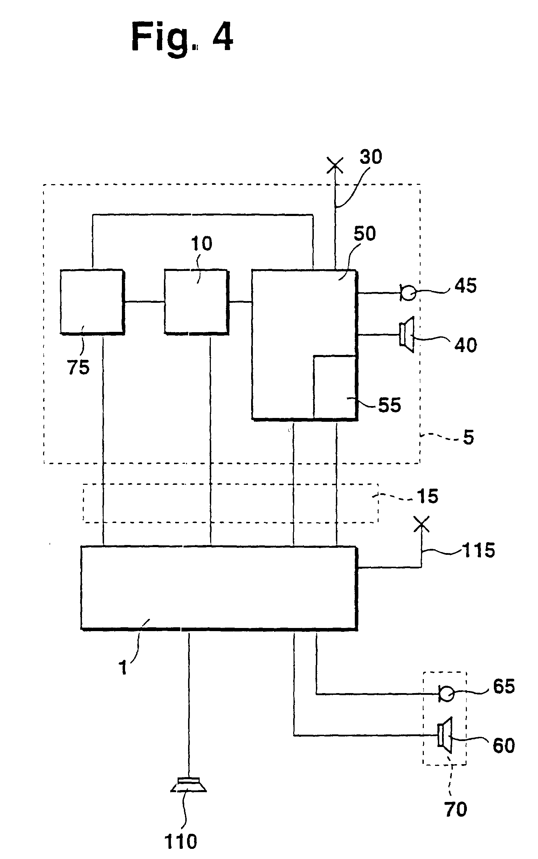

An seiner Rückseite weist das Bedienteil 5 gemäß Figur 2 Aussparungen 80 für eine Hörkapsel 40 und eine Aussparung 85 für ein Mikrophon 45 auf. An der Rückseite des Bedienteils 5 sind außerdem vier Aussparungen 90 für einen Haltemechanismus des Rundfunkempfängers 1 zur Halterung des Bedienteils 5 an dem Rundfunkempfänger 1 vorgesehen. Weiterhin ist auf der Rückseite des Bedienteils 5 ein Infrarot-Sende-/Empfänger 21, 22 vorgesehen. Dabei weist: der Infrarot-Sende-/Empfänger 21, 22 einen Sender 21 und einen Empfänger 22 auf und ist Teil der Schnittstelle 15.

In Figur 3 ist die Vorderansicht des Rundfunkempfängers 1 dargestellt. Dabei kennzeichnen 95 vier Haltehervorhebungen, die bei auf den Rundfunkempfänger 1 aufgesetztem Bedienteil 5 in die Aussparungen 90 des Bedienteils 5 greifen, so daß das Bedienteil 5 mit dem Rundfunkempfänger 1 fest und vor Herausfallen und Kontaktverlust gesichert verbunden ist. Die Haltehervorhebungen 95 sind in einer Öffnung 105 des Rundfunkempfängers 1 zur Aufnahme des Bedienteils 5 angeordnet. Die Öffnung 105 weist eine Aussparung 100 zur Aufnahme der eingeschobenen Antenne 30 des Bedienteils 5 auf. Weiterhin ist an einer Seitenwand der Öffnung 105 eine mit der Buchse 16 des Bedienteils 5 korrespondierende Buchse 17 der Schnittstelle 15 vorgesehen. Außerdem ist in der Öffnung 105 ein Infrarot-Sende/Empfänger 26, 27 untergebracht, der einen Sender 26 und einen Empfänger 27 aufweist. Bei in die Öffnung 105 eingesetztem Bedienteil 5 korrespondiert der Sender 26 des Rundfunkempfängers 1 mit dem Empfänger 22 des Bedienteils 5 und der Sender 21 des Bedienteils 5 korrespondiert dann mit dem Empfänger 27 des Rundfunkempfängers 1. Somit ist auch der Infrarot-Sende-/Empfänger 26, 27 des Rundfunkempfängers 1 Teil der Schnittstelle 15.

In Figur 4 ist das Blockschaltbild des Rundfunkempfängers 1 bei Verbindung mit dem Bedienteil 5 dargestellt. Das Funkgerät 50 weist dabei einen Akkumulator 55 auf und ist mit dem Mikrophon 45 und der Hörkapsel 40 sowie der Antenne 30 verbunden. An das Funkgerät 50 ist außerdem die Tastatur 10 und die Anzeige 75 angeschlossen. Die Tastatur 10 und die Anzeige 75 sind ebenfalls miteinander verbunden. Über die Schnittstelle 15 sind die Anzeige 75, die Tastatur 10, das Funkgerät 50 und der Akkumulator 55 mit dem Rundfunkempfänger 1 verbunden. An den Rundfunkempfänger 1 ist ein Handapparat 70 mit einer Sprecheinrichtung 65 und einer Tonwiedergabeeinheit 60 angeschlossen. An den Rundfunkempfänger 1 sind noch eine weitere Tonwiedergabeeinheit 110 und eine Sende/Empfangsantenne 115 angeschlossen.

Für den Fall, daß das Bedienteil 5 in die Öffnung 105 des Rundfunkempfängers 1 eingesetzt ist, sind die Anschlußkontakte der Buchse 16 des Bedienteils 5 mit entsprechenden Gegenkontakten der Buchse 17 des Rundfunkempfängers 1 elektrisch leitend verbunden. Außerdem befinden sich der Sender 21 des Bedienteils 5 und der Empfänger 27 des Radioempfängers 1 bzw. der Sender 26 des Radioempfängers 1 und der Empfänger 22 des Bedienteils 5 in engem mechanischen und optischen Kontakt miteinander. Über die elektrischen Kontakte der Buchsen 16 und 17 wird das Bedienteil 5 mit Strom versorgt, der Akkumulator 55 aufgeladen und vom Funkgerät 50 erzeugte Antennensignale an den Rundfunkempfänger 1 zur Abstrahlung über dessen Sende/Empfangsantenne 115 weitergeleitet bzw. vom Rundfunkempfänger 1 über dessen Sende-/Empfangsantenne 115 empfangene Antennensignale an das Funkgerät 50 abgegeben.

Die Datenkommunikation zwischen Bedienteil 5 und Rundfunkempfänger 1 zur Übertragung von Meldungen und Signalisierungsdaten an die Anzeige 75 bzw. zur Übermittlung von Eingaben an der Tastatur 10 zum Rundfunkempfänger 1 kann ebenfalls über die elektrischen Anschlußkontakte der Buchsen 16 und 17 erfolgen. Bei einer hohen Datenrate besteht jedoch die Gefahr, daß es zum Überkoppeln von Signalen der einzelnen Verbindungsleitungen kommt, so daß Probleme mit der elektromagnetischen Verträglichkeit auftreten. In diesem Fall ist die Datenkommunikation in vorteilhafter Weise über die Infrarot-Sende/-Empfänger 21, 22 und 26, 27 durchzuführen. Auch eine Übertragung der Antennensignale über die Infrarot-Sende-/Empfänger 21, 22 und 26, 27 ist denkbar. Über die Tastatur 10 kann sowohl das Funkgerät 50 als auch der Rundfunkempfänger 1 bedient werden. Dabei können an der Anzeige 75 Informationen über die an der Tastatur 10 gewählten Eingaben bzw. Befehle dargestellt werden. So kann beispielsweise eine für den Rundfunkempfangsbetrieb eingestellte Frequenz oder ein gewählter Empfangsbereich dargestellt werden. Im Funktelefonbetrieb kann beispielsweise eine an der Tastatur 10 eingegebene Telefonnummer oder ein an der Tastatur 10 eingegebenes Kurzwahlziel dargestellt werden. Genauso können auch in der Schnittstelle 15 vom Rundfunkempfänger 1 empfangene Daten an der Anzeige 75 dargestellt werden, beispielsweise für den Rundfunkempfangsbetrieb Informationen über die Empfangsfeldstärke und für den Funktelefonbetrieb die Rufnummer eines rufenden Teilnehmers. Ist das Bedienteil 5 auf den Rundfunkempfänger 1 aufgesteckt, so wird die eingebaute Antenne 30, die Hörkapsel 40 und das Mikrophon 45 des Bedienteils 5 abgeschaltet. Die entsprechenden Funktionen werden nun vom fest eingebauten Rundfunkempfänger 1 übernommen. Die vom Funkgerät 50 erzeugten Antennensignale werden über die Schnittstelle 15 und den Rundfunkempfänger 1 ggf. über einen nicht dargestellten Antennenverstärker an die Sende/Empfangsantenne 115 zur Abstrahlung weitergeleitet. Auf diese Weise können Funksignale vom Bedienteil 5 über die Sende-/Empfangsantenne 115 an mindestens eine Funkstation eines Funknetzes, beispielsweise eines Mobilfunknetzes abgestrahlt werden. Umgekehrt können von Funkstationen des Funknetzes abgestrahlte Funksignale von der Sende/Empfangsantenne 115 des Rundfunkempfängers 1 empfangen werden und über den Rundfunkempfänger 1 und die Schnittstelle 15 an das Funkgerät 50 weitergeleitet werden. Eine akustische Wiedergabe solcher Funksignale kann mittels der Tonwiedergabeeinheit 60 des Handapparates 70 und/oder über die weitere Tonwiedergabeeinheit 110 erfolgen. Über die Sprecheinrichtung 65 des Handapparates 70 können Ton- und/oder Sprachsignale vom Benutzer am Rundfunkempfangsgerät 1 eingegeben werden. Anstelle der Sprecheinrichtung 65 des Handapparates 70 kann auch eine separate Sprecheinrichtung an den Rundfunkempfänger 1 angeschlossen werden, die den gleichen Zweck erfüllt. Die eingegebenen Ton- und/oder Sprachsignale werden dann vom Rundfunkempfänger 1 über die Schnittstelle 15 an das Funkgerät 50 zur Erzeugung entsprechender Antennensignale weitergeleitet. Die Antennensignale werden dann in der beschriebenen Weise an die Sende-/Empfangsantenne 115 zur Abstrahlung weitergeleitet. Die Sende-/Empfangsantenne 115 ist als Kombi-Antenne ausgeführt und dient auch zum Empfang von Rundfunksignalen. Durch Einführung einer Zugangsberechtigungskarte in den Kartenschacht 35 ist die Funktion des in das Bedienteil 5 integrierten Funkgerätes 50 und die Funktion des Rundfunkempfängers 1 aktivierbar. Auf diese Weise wird eine unberechtigte Benutzung des Funkgerätes 50 bzw. des Rundfunkempfängers 1 verhindert.

Verläßt der Benutzer des Rundfunkempfängers 1 sein Fahrzeug, so entfernt er das Bedienteil 5 zur Sicherung des Rundfunkempfängers 1 vor Diebstahl. Gleichzeitig wird die Antenne 30, die Hörkapsel 40 und das Mikrophon 45 aktiviert. Zur Verbesserung der Sende- und Empfangseigenschaften kann der Benutzer die Antenne 30 ausziehen und dadurch verlängern. Das Bedienteil 5 kann nun als voll funktionsfähiges Funktelephon unabhängig vom Rundfunkempfänger 1 zur Kommunikation mit Funkstationen des Funknetzes verwendet werden. Dazu verbleibt die Zugangsberechtigungskarte im Bedienteil, deren Kartenschacht 35 einen Kartenleser umfaßt. Die Stromversorgung erfolgt dabei durch den Akkumulator 55. Eingaben an der Tastatur 10 können wie beschrieben für den Funktelefonbetrieb an der Anzeige 75 dargestellt werden. Zur Darstellung an der Anzeige 75 können auch von der Antenne 30 empfangene Funksignale nach Umwandlung in entsprechende Daten im Funkgerät 50 gebracht werden. Dies kann beispielsweise die Rufnummer eines rufenden Teilnehmers sein. Die Kommunikation mit Funkstationen des Funknetzes erfolgt nun dadurch, daß vom Funkgerät 50 erzeugte Funksignale direkt von der Antenne 30 abgestrahlt bzw. Funksignale direkt vom Funkgerät 50 über die Antenne 30 empfangen werden. Durch Entfernen des Bedienteils 5 vom Rundfunkempfänger 1 ist der Rundfunkempfänger 1 nicht mehr bedienbar und somit auch nicht mehr funktionsfähig.

Da der Name bzw. der Typ des Rundfunkempfängers normalerweise auf dem Bedienteil 5 angebracht ist, läßt sich bei entferntem Bedienteil 5 auch nicht mehr die Qualitätsklasse des Rundfunkempfängers abschätzen. Auf diese Weise ist ein äußerst wirksamer Diebstahlschutz gegeben, wobei dem Benutzer gleichzeitig ein voll funktionsfähiges Funktelefon zur Verfügung steht.

Die Erfindung ist nicht auf Autoradios beschränkt, sondern für beliebige Rundfunkempfänger anwendbar.

## Patentansprüche

1. Rundfunkempfänger (1), vorzugsweise Autoradio, mit abnehmbarem Bedienteil (5) zur Bedienung des Rundfunkempfängers (1), wobei das Bedienteil (5) eine Tastatur (10) und ein vorzugsweise als Funktelefon ausgebildetes Funkgerät (50) zur Kommunikation mit mindestens einer Funkstation aufweist, wobei mit der Tastatur (10) auch das Funkgerät (50) bedient wird, **dadurch gekennzeichnet**, daß mindestens eine Schnittstelle (15) vorgesehen ist, über die bei mit dem Rundfunkempfänger (1) verbundenen Bedienteil (5) Antennensignale zwischen dem Bedienteil (5) und dem Rundfunkempfänger (1) ausgetauscht werden.

2. Rundfunkempfänger (1) nach Anspruch 1, **dadurch gekennzeichnet**, daß bei mit dem Rundfunkempfänger (1) verbundenem Bedienteil (5) über die Schnittstelle (15) eine Stromversorgung des Bedienteils (5) erfolgt.

3. Rundfunkempfänger (1) nach Anspruch 1 oder 2, **dadurch gekennzeichnet**, daß das Bedienteil (5) einen Akkumulator (55) umfaßt, der über die Schnittstelle (15) aufladbar ist.

4. Rundfunkempfänger (1) nach Anspruch 1, 2 oder 3, **dadurch gekennzeichnet**, daß das Bedienteil (5) einen Kartenschacht (35) zur Aufnahme einer Zugangsberechtigungskarte umfaßt.

5. Rundfunkempfänger nach einem der vorherigen Ansprüche, **dadurch gekennzeichnet**, daß die Schnittstelle (15) zumindest teilweise als optische, vorzugsweise im Infrarotbereich wirkende Schnittstelle mit einem Sende-/Empfänger (21, 22) am Bedienteil (5) und einem Sende-/Empfänger (26, 27) am Rundfunkempfänger (1) ausgebildet ist.

6. Rundfunkempfänger (1) nach einem der vorherigen Ansprüche, **dadurch gekennzeichnet**, daß das Bedienteil (5) eine Hörkapsel (40) und/oder ein Mikrophon (45) umfaßt.

7. Rundfunkempfänger (1) nach einem der vorherigen Ansprüche, **dadurch gekennzeichnet**, daß bei abgenommenem Bedienteil (5) Funksignale zur Kommunikation mit der Funkstation vom Bedienteil (5) über eine vorzugsweise ausziehbare Antenne (30) aussendbar und/oder empfangbar sind.

8. Rundfunkempfänger (1) nach Anspruch 6 oder 7, **dadurch gekennzeichnet**, daß bei auf den Rundfunkempfänger (1) aufgestecktem Bedienteil (5) die Antenne (30) und/oder die Hörkapsel (40) und/oder das Mikrophon (45) abgeschaltet ist.

9. Rundfunkempfänger (1) nach einem der vorherigen Ansprüche, **dadurch gekennzeichnet**, daß der Rundfunkempfänger (1) mit einer Tonwiedergabeeinheit (60) und/oder einer Sprecheinrichtung (65) vorzugsweise eines Handapparates (70) verbunden ist.

10. Rundfunkempfänger (1) nach einem der vorherigen Ansprüche, **dadurch gekennzeichnet**, daß an einer Anzeige (75) des Bedienteils (5) eine Darstellung von Informationen über die an der Tastatur (10) gewählten Befehle und/oder von in einer Schnittstelle (15) empfangenen Daten erfolgt.

## Claims

1. Radio receiver (1), preferably a car radio, having a removable control section (5) for operating the radio receiver (1), the control section (5) having a keypad (10) and a radio (50), preferably in the form of a radio telephone, for communicating with at least one radio station, the keypad (10) also being used to operate the radio (50), **characterized in that** there is at least one interface (15) which is used to interchange antenna signals between the control section (5) and the radio receiver (1) when the control section (5) is connected to the radio receiver (1).

2. Radio receiver (1) according to Claim 1, **characterized in that** the interface (15) is used to supply the control section (5) with power when the control section (5) is connected to the radio receiver
(1).

3. Radio receiver (1) according to Claim 1 or 2, **characterized in that** the control section (5) comprises a storage battery (55) which can be charged via the interface (15).

4. Radio receiver (1) according to Claim 1, 2 or 3, **characterized in that** the control section (5) comprises a card slot (35) for holding an access authorization card.

5. Radio receiver according to one of the preceding claims, **characterized in that** at least part of the interface (15) is in the form of an optical interface, preferably active in the infrared range, having a transceiver (21, 22) on the control section (5) and a transceiver (26, 27) on the radio receiver (1) .

6. Radio receiver (1) according to one of the preceding claims, **characterized in that** the control section (5) comprises an earphone (40) and/or a microphone (45).

7. Radio receiver (1) according to one of the preceding claims, **characterized in that**, when the control section (5) is removed, radio signals for communicating with the radio station can be transmitted and/or received by the control section (5) via a preferably extensible antenna (30).

8. Radio receiver (1) according to Claim 6 or 7, **characterized in that**, when the control section (5) is plugged onto the radio receiver (1), the antenna (30) and/or the earphone (40) and/or the microphone (45) are/is disconnected.

9. Radio receiver (1) according to one of the preceding claims, **characterized in that** the radio receiver (1) is connected to a sound reproduction unit (60) and/or to a speaking device (65), preferably in a handset (70).

10. Radio receiver (1) according to one of the preceding claims, **characterized in that** a display (75) on the control section (5) shows information about the commands selected on the keypad (10) and/or shows data received in an interface (15).

## Revendications

1. Récepteur radio (1), notamment autoradio, comportant une partie de commande amovible (5) pour mettre en oeuvre le récepteur radio (1), la partie de commande (5) comportant un clavier (10) et un appareil émetteur (50) de préférence comme radiotéléphone pour communiquer avec au moins une station d'émission, le clavier (10) commandant également l'appareil émetteur (50),
**caractérisé en ce qu**'
il comporte au moins une interface (15) permettant l'échange des signaux d'antenne de la partie de commande (5) reliée au récepteur radio (1), entre la partie de commande (5) et le récepteur radio (1).

2. Récepteur radio (1) selon la revendication 1,
**caractérisé en ce que**
l'alimentation électrique de la partie de commande (5) reliée au récepteur radio (1) se fait par l'intermédiaire de l'interface (15).

3. Récepteur radio (1) selon l'une quelconque des revendications 1 ou 2,
**caractérisé en ce que**
la partie de commande (5) comprend un accumulateur (55) qui se charge par l'intermédiaire de l'interface (15).

4. Récepteur radio (1) selon l'une quelconque des revendications 1, 2, 3,
**caractérisé en ce que**
la partie de commande (5) comporte un logement de carte (35) pour recevoir une carte d'autorisation d'accès.

5. Récepteur radio (1) selon l'une quelconque des revendications précédentes,
**caractérisé en ce que**
l'interface (15) est réalisée au moins en partie comme une interface optique, notamment dans le domaine infrarouge, comprenant un émetteur/récepteur (21, 22) sur la partie de commande (5) et un émetteur/récepteur (26, 27) sur la partie de récepteur radio (1).

6. Récepteur radio (1) selon l'une quelconque des revendications précédentes,
**caractérisé en ce que**
la partie de commande (5) comprend une oreillette (40) et/ou un micro (45).

7. Récepteur radio (1) selon l'une quelconque des revendications précédentes,
**caractérisé en ce que**
lorsque la partie de commande (5) est enlevée, les signaux radios pour communiquer avec la station radio sont émis et/ou reçus de la partie de commande (5), de préférence par une antenne extractible (30).

8. Récepteur radio (1) selon l'une quelconque des revendications 6 ou 7,
**caractérisé en ce que**
lorsque la partie de commande (5) est engagée sur le récepteur radio (1), l'antenne (30) et/ou l'oreillette (40) et/ou le micro (45) sont coupés.

9. Récepteur radio (1) selon l'une quelconque des revendications précédentes,
**caractérisé en ce que**
le récepteur radio (1) est relié à une unité de reproduction sonore (60) et/ou à une installation vocale (65), de préférence un combiné (70).

10. Récepteur radio (1) selon l'une quelconque des revendications précédentes,
**caractérisé en ce que**
l'afficheur (75) de la partie de commande (5) présente les informations des ordres sélectionnés par l'intermédiaire du clavier (10) et/ou des données reçues par l'interface (15).
